(19) Europäisches Patentamt
European Patent Office
Office européen des brevets

(11) Veröffentlichungsnummer: **0 075 166**
**B1**

(12) # EUROPÄISCHE PATENTSCHRIFT

(45) Veröffentlichungstag der Patentschrift: **17.04.85**

(51) Int. Cl.⁴: **C 08 G 65/32**, C 08 G 65/48, B 01 F 17/44

(21) Anmeldenummer: **82108172.6**

(22) Anmeldetag: **04.09.82**

(54) **Polymere Ethylenoxid-Propylenoxid- oder Ethylenoxid-Butylenoxid-Ethercarbonsäuren, Verfahren zu deren Herstellung und deren Verwendung.**

(30) Priorität: **11.09.81 DE 3136025**

(43) Veröffentlichungstag der Anmeldung: **30.03.83 Patentblatt 83/13**

(45) Bekanntmachung des Hinweises auf die Patenterteilung: **17.04.85 Patentblatt 85/16**

(84) Benannte Vertragsstaaten: **DE FR GB IT NL**

(56) Entgegenhaltungen:
**EP-A-0 011 237**
**DE-A-2 408 591**
**DE-B-1 495 584**
**DE-C-1 120 142**
**US-A-2 756 254**

(73) Patentinhaber: **HOECHST AKTIENGESELLSCHAFT, Postfach 80 03 20, D-6230 Frankfurt am Main 80 (DE)**

(72) Erfinder: **Diery, Helmut, Dr., Theresenstrasse 45, D-6233 Kelkheim (Taunus) (DE)**
Erfinder: **Wester, Norbert, Dr., Sachsenring 12, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 075 166 B1

BUNDESDRUCKEREI BERLIN

**Beschreibung**

Blockpolymere aus Ethylenoxid/Propylenoxid mit der allgemeinen Formel

$$HO-(CH_2-CH_2-O)_x-(\underset{\displaystyle CH_3}{CH}-CH_2-O)_y-(CH_2-CH_2-O)_z-H$$

sind als universal anwendbare, schwach schäumende nichtionische Tenside bekannt und werden als solche in den Handel gebracht. Die Einführung von Carboxylgruppen in solche Nonionics, etwa durch Umsetzung von Alkyloxethylaten mit Chloressigsäure, liefert anionische Verbindungen mit deutlich verändertem Wirkungsspektrum.

Gegenstand der vorliegenden Erfindung sind neue Ethercarbonsäure-Derivate von Ethylenoxid-Propylenoxid- bzw. Butylenoxid-Polymeren mit der Formel I

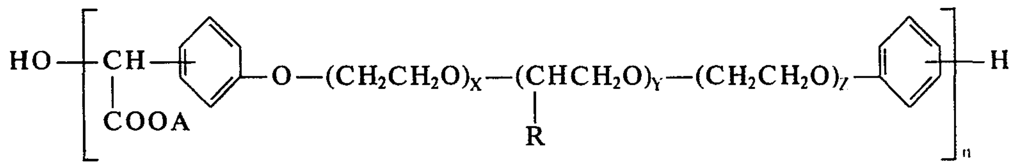

(I)

worin R Methyl oder Ethyl, bevorzugt Methyl, A Wasserstoff oder ein Metallkation, vorzugsweise $Na^{(+)}$ oder $K^{(+)}$, X und Z zusammen eine Zahl von 2 bis 360, bevorzugt von 2 bis 140, Y eine Zahl von 15 bis 70, bevorzugt von 25 bis 70 und n eine Zahl von 1 bis 10 bedeuten.

Die Verbindungen der obigen Formel I werden hergestellt, indem man eine Verbindung der Formel II

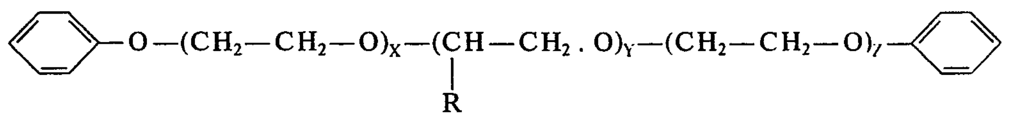

(II)

in Gegenwart eines sauren Katalysators mit Glyoxylsäure umsetzt und anschließend gegebenenfalls neutralisiert.

Die als Ausgangsverbindungen dienenden Diphenylether der Formel II werden erhalten, indem man nach bekannten Verfahren zunächst ein Ethylenoxid-Propylenoxid- bzw. Butylenoxid-Blockpolymerisat der Formel III

$$HO-(CH_2CH_2O)_X-(\underset{\displaystyle R}{C}HCH_2O)_Y(CH_2CH_2O)_Z-H \qquad \text{(III)}$$

chloriert, beispielsweise mit Thionylchlorid in Substanz oder in einem inerten Lösungsmittel bei Temperaturen von 80 bis 120°C, vorzugsweise bei 90°C. Die dabei erhaltene $\alpha,\omega$-Dichlorverbindung der Formel IV

$$Cl-(CH_2CH_2O)_X-(\underset{\displaystyle R}{C}HCH_2O)_Y-(CH_2CH_2O)_{Z-1}-CH_2CH_2-Cl \qquad \text{(IV)}$$

wird dann in einem höhersiedenden Alkohol, vorzugsweise Isobutanol, bei dessen Siedetemperatur mit einem Alkaliphenolat umgesetzt.

Die Reaktion des $\alpha,\omega$-Diphenylethers der Formel II mit der Glyoxylsäure erfolgt in Gegenwart eines saueren Katalysators (Lewis-Säure), beispielsweise Zinkchlorid. Anstelle von Glyoxylsäure kann auch Glyoxylsäuremonohydrat eingesetzt werden. In diesem Fall empfiehlt es sich ein wasserbindendes Reagenz wie etwa konz. Schwefelsäure zuzugeben. Als Reaktionsmedium dient vorzugsweise Eisessig und die Reaktion erfolgt bei 70—120°C, vorzugsweise 90°C. Das Molverhältnis der Reaktionspartner beträgt 1,5 Mol Glyoxylsäure auf ein Mol des $\alpha,\omega$-Diphenylethers. Als Endprodukt erhält man Polymere deren Kettenlänge ungefähr durch die Zahlen von 1 bis 10 für den Index n in der Formel I angegeben werden können. Soll in der Verbindung der Formel I A ein Kation darstellen, so werden die bei der zuvor beschriebenen Reaktion erhaltenen Verbindungen noch mit der äquivalenten Menge einer Base neutralisiert, vorzugsweise mit Natrium- oder Kaliumhydroxid.

Die erfindungsgemäßen Produkte sind gelbe bis dunkelbraune, zum Teil hochviskose Verbindungen, die bei pH-Werten oberhalb 6 in jedem Verhältnis mit Wasser bzw. Wasser/Alkohol-Gemischen verdünnbar sind. Als anionaktive Substanzen mit nichtionogenen Strukturelementen können sie vielseitig

als Tenside eingesetzt werden. Sie zeichnen sich durch gute Netz- und Dispergiereigenschaften aus und sind wertvolle Färbereihilfsmittel und Emulgatoren.

Allgemeine Darstellung der $\alpha,\omega$-Dichlorverbindungen IV

Zu 1 Mol eines Diols der allgemeinen Formel III läßt man bei 50°C 2,4 Mol Thionylchlorid unter Rühren so schnell zulaufen, daß die Innentemperatur nicht über 90°C ansteigt. Man hält 3 h bei dieser Temperatur, entfernt die sauren Gase durch Einleiten eines kräftigen $N_2$-Stromes und erhält die Dichloride in nahezu quantitativer Ausbeute.

Allgemeine Darstellung der $\alpha,\omega$-Diphenylether II

1 Mol eines Dichlorids IV wird zusammen mit 2,05 Mol Phenol und 2,05 Mol KOH 10 h in Isobutanol unter Rückfluß erhitzt. Vom ausgefallenen KCl wird abfiltriert und das Lösungsmittel im Vakuum abdestilliert. Man erhält die $\alpha,\omega$-Diphenylether in guten Ausbeuten.

Allgemeine Darstellung der Ethercarbonsäuren I

1 Mol eines $\alpha,\omega$-Diphenylethers II wird mit 1,5 Mol Glyoxylsäuremonohydrat, katalytischen Mengen $ZnCl_2$ und 1,5 Mol konz. $H_2SO_4$ 10 h bei 90°C in Eisessig zur Reaktion gebracht. Man filtriert oder dekantiert von $ZnCl_2$ ab, entfernt den Eisessig durch Destillation im Vakuum und neutralisiert ab. Man erhält die Ethercarbonsäuren I bzw. deren Salze in guten Ausbeuten.

Beispiel 1

774 g (0,4 Mol) eines Ethylenoxid/propylenoxid-Blockpolymers mit einem PyO-Block von 1750 plus ca. 10% EO, Mol = 1935 aus OH-Zahl, werden nach den oben beschriebenen allgemeinen Darstellungsmethoden schrittweise mit $SOCl_2$, Phenolat und Glyoxylsäure zu 772 g (90% d. Th.) der Ethercarbonsäure Ia umgesetzt.

(Ia: R = $CH_3$, A = H, X + Z = 4,2, y = 30)

Beispiel 2

Ausgehend von einem Ethylenoxid/Propylenoxid-Blockpolymer mit einem PyO-Block von 1750 plus ca. 20% EO, Mol: 2550 aus OH-Zahl, erhält man mit einer Ausbeute von 88% d. Th. auf die gleiche Weise die Verbindung Ib

(R = $CH_3$, A = H, X + Z = 18,2, y = 30)

Beispiel 3

Ausgehend von einem Ethylenoxid/Propylenoxid-Blockpolymer mit einem PyO-Block von 1750 plus ca. 40% EO, Mol: 2700 aus OH-Zahl, erhält man mit einer Ausbeute 91% d. Th. auf die gleiche Weise die Verbindung Ic

(R = $CH_3$, A = H, X + Z = 21,6, y = 30)

**Patentansprüche**

1. Polymere Ethylenoxid-Propylenoxid- bzw. Ethylenoxid-Butylenoxid-Ethercarbonsäuren der Formel

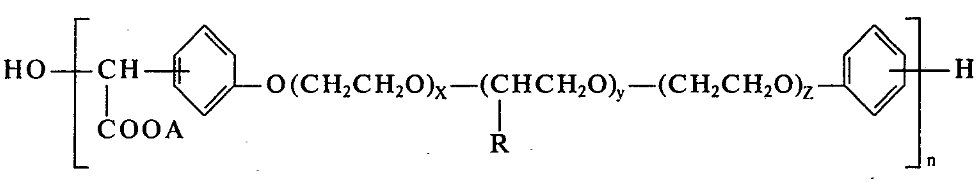 (I)

worin R Methyl oder Ethyl, bevorzugt Methyl, A Wasserstoff oder ein Metallkation, vorzugsweise $Na^{(+)}$ oder $K^{(+)}$, X und Z zusammen eine Zahl von 2 bis 360, bevorzugt von 2 bis 140, y eine Zahl von 15 bis 70, bevorzugt von 25 bis 70 und n eine Zahl von 1 bis 10 bedeuten.

2. Verfahren zur Herstellung der Verbindungen nach Anspruch 1, dadurch gekennzeichnet, daß man eine Verbindung der Formel II

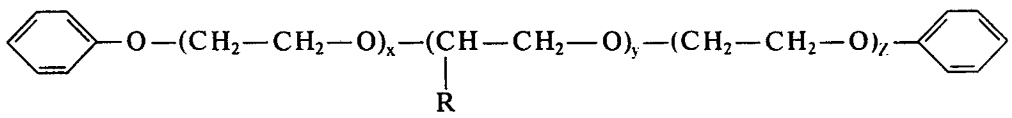

in Gegenwart eines sauren Katalysators mit Glyoxylsäure umsetzt und anschließend gegebenenfalls neutralisiert.

3. Verwendung der Verbindungen nach Anspruch 1 als Netz- und Dispergiermittel, Färbereihilfsmittel und Emulgatoren.

## Claims

1. A polymeric ethylene oxide/propylene oxide or ethylene oxide/butylene oxide ether carboxylic acid of the formula

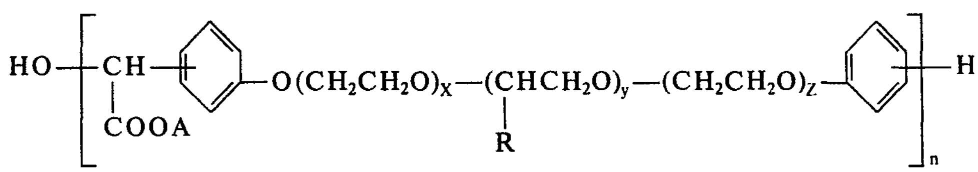

(I)

wherein R denotes methyl or ethyl, preferably methyl, A denotes hydrogen or a metal cation, preferably $Na^{(+)}$ or $K^{(+)}$, X and Z together denote a number from 2 to 360, preferably from 2 to 140, y denotes a number from 15 to 70, preferably from 25 to 70 and n denotes a number from 1 to 10.

2. A process for the preparation of the compound as claimed in claim 1, which comprises reacting a compound of the formula II

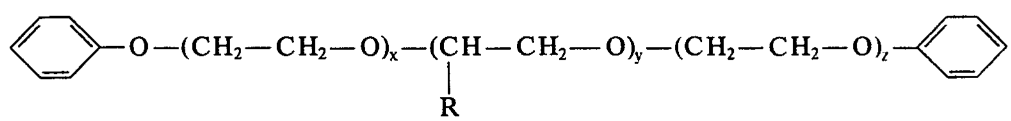

in the presence of an acid catalyst, with glyoxylic acid and then, if appropriate, neutralizing.

3. The use of the compound as claimed in claim 1 as a wetting agent and dispersant, dyeing auxiliary and emulsifier.

## Revendications

1. Oxyde d'éthylène/oxide de propylène ou oxyde d'éthylène/oxide de butylène/éthers/acides carboxyliques polymères qui répondant à la formule I

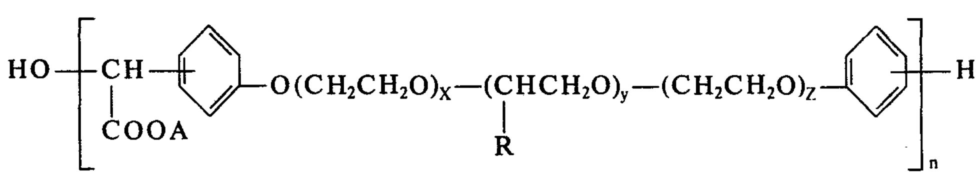

(I)

dans laquelle R représente un radical méthyle ou éthyle, de préférence méthyle, A représente l'hydrogène ou un cation métallique de préférence $Na^{(+)}$ ou $K^{(+)}$, la somme (X + Z) est égale à un nombre de 2 à 360, de préférence de 2 à 140, Y représente un nombre de 15 à 70, de préférence de 25 à 70, et n représente un nombre de 1 à 10.

2. Procédé pour préparer les composés selon la revendication 1, procédé caractérisé en ce qu'on fait réagir un composé de formule II:

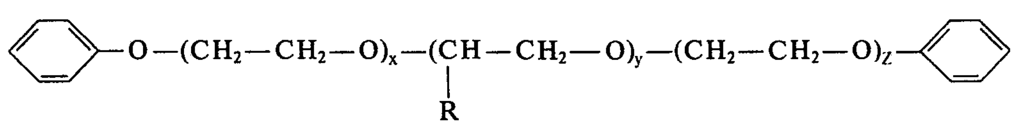

(II)

avec l'acide glyoxylique en présence d'un catalyseur acide, puis, le cas échéant, on neutralise.

3. Application des composés selon la revendication 1 comme mouillants et dispersants, comme adjuvants de teinturerie et comme émulsionnants.